# EUROPEAN PATENT APPLICATION

(11) **EP 3 805 353 A1**
(43) Date of publication of application: **14.04.2021**
(21) Application number: 19810747.6
(22) Date of filing: 20.05.2019
(51) Int. Cl.: C12G 3/06

(54) **ALCOHOLIC BEVERAGE**

(30) Priority: 29.05.2018 JP 2018102487
(71) Applicant: Suntory Holdings Limited, Osaka 530-8203 (JP)
(72) Inventor: MATSUMOTO, Takehiro, Kawasaki-shi, Kanagawa 211-0067 (JP); USHIKU, Jun, Kawasaki-shi, Kanagawa 211-0067 (JP); TAKAGI, Daisuke, Kawasaki-shi, Kanagawa 211-0067 (JP); OHIRA, Takahiro, Kawasaki-shi, Kanagawa 211-0067 (JP); URABE, Hiroyuki, Kawasaki-shi, Kanagawa 211-0067 (JP)
(74) Representative: Vossius & Partner Patentanwälte Rechtsanwälte mbB
(86) International application number: PCT/JP2019/019844
(87) International publication number: WO 2019/230467

(57) **Abstract**

An object of the present invention is to control a stimulation of a tingling aftertaste caused by limonene and alcohol in an alcoholic beverage containing limonene. The present invention provides an alcoholic beverage containing 10 to 60 ppm of limonene and 5 to 25 ppm of eriocitrin.

## Description

### TECHNICAL FIELD

The present invention relates to an alcoholic beverage containing limonene and eriocitrin and a method for producing the same.

### BACKGROUND ART

Flavor components derived from citrus fruits represented by limonene are included in various foods and drinks. Flavor components of citrus fruits, having a combination of moderate sweetness and acidity and a refreshing aroma distinctive to citrus fruits, can impart a distinctive refreshing feel to beverages, and thus beverages to which the flavor of citrus fruits is imparted are liked by many people. For example, Limoncello, a liqueur using lemon, is produced by dipping lemon peels into a distilled alcoholic beverage with a high alcohol content (alcohol degree) for a certain period of time, and contains various flavor components derived from lemon (non-patent literature (NPL) 1).

Patent literature (PTL) 1 describes the production of an alcoholic beverage by micro-grinding raw whole fruits while entirely frozen and dipping the micro-ground fruits in alcohol. Further, PTL 2 discloses that eriocitrin, an antioxidant component derived from a citrus fruit, is included in food products. Further, PTL 3 proposes the production of a beverage by including juices of flavorful acidic citrus fruits and citrus flavonoids thereby to impart a sense of freshness of fruits and a flavor characteristic of flavorful acidic citrus fruits.

### CITATION LIST

### PATENT LITERATURE

PTL 1: International Publication No. WO 2006/009252
PTL 2: Japanese Patent Laid-Open No. 2000-217560
PTL 3: International Publication No. WO 2016/114277

### NON PATENT LITERATURE

NPL 1: Analysis of Some Italian Lemon Liquors (Limoncello), J. Agric. Food Chem., Vol. 51, No. 17, 2003, P4978-4983

### SUMMARY OF INVENTION

### TECHNICAL PROBLEM

The present inventors have found that when limonene is included in an alcoholic beverage, a stimulation of tingling taste is particularly intensified by limonene and alcohol. More specifically, some flavor components of citrus fruits have a unique tingling aftertaste, and alcohol (ethanol) itself also has a stimulation, and the present inventors further found that when limonene and alcohol are co-present, the tingling stimulation caused by the flavor components of citrus fruits is particularly intensely sensed.

However, when the flavor components derived from citrus fruits are simply removed to reduce the stimulation of these tingling aftertastes, flavors of foods and drinks are significantly affected, and as a result a good taste of foods and drinks themselves and citrus fruitness are lost.

Under such circumstances, the present invention has an object to provide an easy-to-drink beverage having a decreased stimulation of tingling tastes in foods and drinks having citrus fruit flavors, particularly in alcoholic beverages containing alcohol.

### SOLUTION TO PROBLEM

The present inventors conducted extensive studies on a method for masking the stimulation of an aftertaste particularly intensely sensed when limonene, a flavor component of citrus fruits, and alcohol are co-present and consequently found that the above problem can be solved when eriocitrin is contained in a specific concentration.

The present invention encompasses the following inventions but not limited thereto.
(1) An alcoholic beverage containing 10 to 60 ppm of limonene and 5 to 25 ppm of eriocitrin.
(2) The alcoholic beverage according to (1), containing 15 to 50 ppm of limonene.
(3) The alcoholic beverage according to (1) or (2), wherein an alcohol content is 1 to 15 v/v%.
(4) The alcoholic beverage according to any of (1) to (3), containing p-cresol so that a weight ratio of p-cresol/eriocitrin is 0.0060 or less.
(5) A method for controlling a stimulation of a tingling aftertaste in an alcoholic beverage containing 10 to 60 ppm of limonene,
the method comprising causing the beverage to contain 5 to 25 ppm of eriocitrin.

### ADVANTAGEOUS EFFECTS OF INVENTION

According to the present invention, the stimulation of a tingling taste caused by limonene and alcohol in an alcoholic beverage containing limonene can be effectively masked by eriocitrin at an amount in the specific range.

### DESCRIPTION OF EMBODIMENTS

The present invention relates to an alcoholic beverage containing limonene and eriocitrin. The alcoholic beverage according to the present invention refers to a beverage containing alcohol, and the alcohol herein means ethyl alcohol (ethanol) unless otherwise noted. As mentioned above, when alcohol is co-present in a beverage containing limonene, the stimulation of a tingling aftertaste is intensely sensed, but according to the present invention this stimulation of aftertaste can be controlled.

The type of alcoholic beverage according to the present invention does not matter particularly as long as alcohol is contained, and preferable examples include spirits such as chu-hais, cocktails and fizzes, and liqueurs. The alcohol raw material is not particularly limited and examples include spirits (such as rum, vodka and gin), liqueurs (for example, spirits such as gin, vodka and tequila, material alcohols and neutral alcohols), whiskies, brandies, and Shochus, and further brewed alcoholic beverages such as beers. These alcohol raw materials can be used singly or in combination.

The raw material of alcohol used in the beverage of the present invention is not particularly limited as long as it is an alcohol-containing liquid suitable for a beverage and can be obtained by, for example, alcohol fermentation of sugar by yeasts. The raw material for alcohol fermentation is also not particularly limited, and examples include fruits such as grape, apple, cherry and coconut, grains such as rice, barley and corn, root vegetables such as potato and sweet potato, and sugarcane.

The alcohol content of an alcoholic beverage is not particularly limited and is preferably 15 v/v% or less, more preferably 13 v/v% or less, and further more preferably 11 v/v% or less. Since when an alcohol content is more than 15 v/v%, the stimulation of a tingling aftertaste is intensified, and a large amount of eriocitrin is required to mask the stimulation of a tingling aftertaste, which may affect a good taste of the beverage. The lower limit of an alcohol content is not particularly limited and is preferably 1 v/v% or more, more preferably 2 v/v% or more, and further more preferably 3 v/v% or more. When an alcohol content is less than 1 v/v%, the stimulation of a tingling aftertaste is not much sensed even with co-presence of limonene. In a preferable embodiment, an alcohol content of an alcoholic beverage of the present invention is 4 to 9 v/v%.

The alcohol content in the beverage of the present invention can be measured using, for example, a mechanical oscillator densitometer. Specifically, a sample obtained by removing carbon dioxide gas from an alcoholic beverage by filtration or ultrasound is prepared, the sample is distilled over an open fire, and a density of the obtained distillate at 15°C is measured for calculation using "Table 2 Conversion table between alcohol content and density (15°C) and specific gravity (15/15°C)", which is an appended table of the Official Analysis Method prescribed by the National Tax Agency (National Tax Agency Directive No. 6 in 2007, revised June 22, 2007).

### Limonene

The alcoholic beverage according to the present invention contains 10 to 60 ppm (mg/L) of D-limonene. Limonene is a monoterpene-based hydrocarbon compound with a sweet and acidic aroma and refreshness suggestive of citrus fruits. Limonene is often contained in a flavor having citrusy flavors, and limonene contained in the beverage of the present invention can be those derived from citrus fruits (such as fruit juices, fruit peels, and fruits), those derived from plants other than citrus fruits, or those artificially synthesized.

In a preferable embodiment, the alcoholic beverage of the present invention contains limonene at 12 to 55 ppm but contains limonene more preferably at 14 to 45 ppm, and further more preferably at 16 to 35 ppm. When the concentration of limonene is low, the stimulation of a tingling aftertaste caused by the co-presence of alcohol is small and the masking effect of the present invention on the stimulation of a tingling aftertaste is not much sensed. On the other hand, when the concentration of limonene is high, the flavor of limonene itself is likely to be too intense.

Limonene contained in the beverage can be quantitatively determined by a known method and for example, can be quantitatively determined by the following method. By preparing a calibration curve of limonene in advance, a liquid composition which is a beverage sample can be analyzed by subjecting to gas chromatography/ mass spectrometry (GC-FID) under the following conditions.
- Analysis pretreatment: sample is applied in Extrelut NT-1 column and extracted with ether
- Analyzer: GC 6890N (Agilent Technologies)
- Column: HP-ULTRA 2 (inner diameter 0.32 mm, length 50 m, film thickness 0.52 µm)
- Carrier gas: helium
- Flow rate: 2.2 mL/min
- Inlet: Splitless
- Inlet temperature: 250°C
- Oven temperature: increased from 45°C (1.5 min) to 230°C (2 min) by 5°C/min
- Detector: FID
- Detector temperature: 260°C
- Injection volume: 2.0 µL

### Eriocitrin

The beverage of the present invention contains 5 to 25 ppm (mg/L) of eriocitrin, by which the stimulation of a tingling aftertaste caused by limonene and alcohol is effectively masked. Eriocitrin is a type of polyphenols contained in lemon and the like and has the following structure.

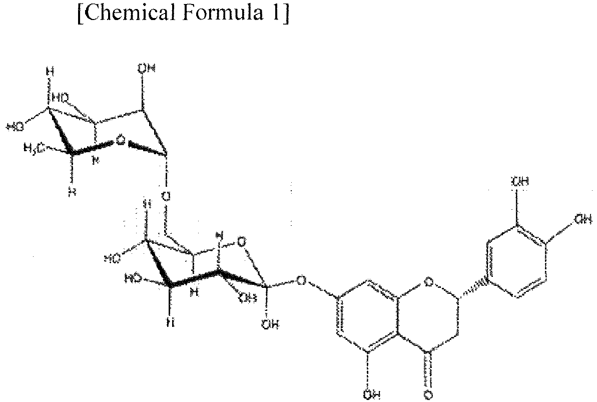

Eriocitrin contained in the beverage of the present invention can be those derived from plants such as citrus fruits or those artificially synthesized. The alcoholic beverage according to the present invention has an eriocitrin concentration of 5 to 25 ppm, preferably 6 to 20 ppm, more preferably 7 to 15 ppm, and the eriocitrin concentration may be 8 to 10 ppm. When an eriocitrin concentration is within these ranges, eriocitrin can effectively mask the stimulation of a tingling aftertaste caused by co-presence of limonene and alcohol and the flavor of the eriocitrin has a little impact on the beverage; therefore, the good taste as the beverage can be maintained.

The concentration of eriocitrin in the beverage can be measured by, for example, high performance liquid chromatography method (HPLC method) under the following measurement conditions.
- Liquid chromatograph: Prominence (manufactured by Shimadzu Corporation)
- Detector: SPD-M20A
- Column oven: CTO-20A
- Autosampler: SIL-20AHT
- Column: TSKgel ODS-80TsQA (4.6 mm × 150 mm)
- Column temperature: 40°C
- Detection wavelength: 280 nm
- Injection volume: 10 µL
- Flaw rate: 1.0 mL/min
- Mobile phase

### (Mobile phase A) water/acetonitrile/trifluoroacetic acid (950/50/0.5)

### (Mobile phase B) water/acetonitrile/trifluoroacetic acid (50/950/0.5)

### (Gradient)

| Time | Mobile phase A | Mobile phase B |
|---|---|---|
| 0 min | 100 % | 0 % |
| 19 min | 33 % | 67 % |
| 19.5 min | 0 % | 100 % |
| 24.5 min | 0 % | 100 % |
| 25 min | 100 % | 0 % |
| 30 min | 100 % | 0 % |

### p-Cresol

According to the present invention, the stimulation of an aftertaste caused by the co-presence of limonene and alcohol can be masked by eriocitrin. In a preferable embodiment of the present invention, it was confirmed that when p-cresol contained in the beverage was contained at a specific concentration, a good alcoholic beverage with a thick flavor was obtained while the stimulation of an aftertaste was masked.

The alcoholic beverage of the present invention contains, in a preferable embodiment, 0.055 ppm or less of p-cresol, and the p-cresol concentration can be more preferably 0.045 ppm or less, further more preferably 0.035 ppm or less, furthermore preferably 0.025 ppm or less, and also can be 0.015 ppm or less. When the concentration of p-cresol is 0.055 ppm or less, the masking effect by eriocitrin on the stimulation of an aftertaste can be sufficiently confirmed. Further, the weight ratio (mass ratio) of p-cresol to eriocitrin is preferably 0.0055 or less. Within such a range, the masking effect of eriocitrin on the stimulation of an aftertaste can be sufficiently confirmed. The weight ratio of p-cresol/eriocitrin is more preferably 0.0030 or less, further preferably 0.0010 or less, and furthermore preferably 0.0005 or less.

The content of p-cresol in the beverage can be measured by, for example, high performance liquid chromatography method (HPLC method) under the following conditions.
- HPLC system: Prominence (Shimadzu Corporation)
- Pump: LC-20AD
- Detector: RF-20A
- Column oven: CTO-20A
- Autosampler: SIL-20AHT
- Column: TSKgel ODS-80TsQA (4.6 mm × 150 mm)
- Column temperature: 40°C
- Detection: Ex 280 nm, Em 310 nm
- Injection volume: 10 µL
- Flow rate: 1.0 mL/min
- Mobile phase

### (Mobile phase A) water/acetonitrile/trifluoroacetic acid (950/50/0.5)

### (Mobile phase B) water/acetonitrile/trifluoroacetic acid (50/950/0.5)

### (Gradient)

| Time | Mobile phase A | Mobile phase B |
|---|---|---|
| 0 min | 100 % | 0 % |
| 19 min | 55 % | 45 % |
| 19.5 min | 0 % | 100 % |
| 24.5 min | 0 % | 100 % |
| 25 min | 100 % | 0 % |

### (Flavor of citrus fruits)

The "citrus" beverage in the present invention means a beverage having a flavor of citrus fruits and refers to a beverage having a flavor suggestive of citrus fruits when drunk. Examples of the citrus fruit include oranges such as valencia orange and navel orange, grapefruits such as grapefruit, flavorful acidic citrus fruits such as lemon, lime, shiikuwasha, bitter orange, yuzu, kabosu, sudachi, citron, and Buddha's hand, hybrid citrus varieties such as Chinese citron, Hassaku orange, Hyuganatsu, oroblanco, and Dekopon, pomelos such as iyokan and tankan, mandarins such as mandarin orange, unshu mikan, Ponkan, and Kishu mikan, and Kumquats such as kumquat.

Examples of the beverage having a flavor of citrus fruits include beverages containing fruits and juices of citrus fruits and beverages with a part of citrus fruit itself used. Further, as long as a flavor of citrus fruits is sensed, the example also include a fruit juice-free beverage such as a beverage containing an extract containing an aroma component extracted from citrus fruits and a beverage containing a fragrance obtained by artificially reproducing an aroma component characteristic of citrus fruits.

When a citrus fruit juice is included in the alcoholic beverage according to the present invention, the amount included thereof is not particularly limited, but the amount is, in terms of pure fruit juice, preferably 0.01 to 30 %, or may be 20 % or less, 10 % or less, and further 5 % or less. As for the type of a fruit juice, both forms of a straight fruit juice in which a fruit juice obtained by extracting fruits is directly used and a concentrated juice can be used. Further, it can be an unclarified fruit juice or a clear fruit juice.

The alcoholic beverage according to the present invention can also use a fruit juice other than citrus fruits in combination. The fruit juice used in combination with citrus fruit juices is not particularly limited, and one or more fruit juices can be used. The amount included of a fruit juice used in combination is not particularly limited. As for the type of a fruit juice, both forms of a pure fruit juice in which a fruit juice obtained by extracting fruits is directly used and a concentrated juice can be used. Further, an unclarified fruit juice can also be used, or a clear fruit juice can be used.

### (pH)

The alcoholic beverage according to the present invention in a preferable embodiment has a pH of the beverage of 2.3 to 4.5, more preferably 2.8 to 4.3, and further preferably 3.3 to 4.1. When the pH is within these ranges, a good taste as the beverage will be particularly good. When the pH of the beverage is less than 2.3, a herb-like aroma distinctive to eriocitrin is likely to be too notable and may affect a taste of the beverage. Further, when the pH of the beverage is more than 4.5, a slight harsh taste may be sensed in the beverage.

When the pH of the beverage is adjusted, the adjustment method is not particularly limited, and the adjustment can be achieved by using a substance typically used for pH adjustment of beverages such as citric acid and trisodium citrate. Further, pH can also be adjusted by adjusting contents of other components (for example, fruit juices).

The pH of the beverage can be measured using a typical pH meter. The beverage, when its pH is measured, is degassed before measurement in the case where carbonic acid is contained. The degassing method is not particularly limited and carbonic acid can be degassed by a general method such as ultrasound treatment, aeration treatment, or reduced pressure degassing treatment.

### (Carbonic acid)

The beverage according to the present invention can be a carbonated beverage containing a carbon dioxide gas. The pressure of a carbon dioxide gas is preferably about a pressure at which a refreshing feel derived from a carbon dioxide gas can be sensed. At a liquid temperature of 20°C, the pressure is preferably 0.5 to 3.5 kgf/cm², more preferably 1.0 to 3.0 kgf/cm², and further more preferably 1.5 to 2.5 kgf/cm².

For addition of a carbon dioxide gas, a method typically known to the person skilled in the art can be used. For example, but not limited thereto, the following methods can be employed: a method in which carbonated water containing carbon dioxide can be included; a method in which carbon dioxide can be dissolved in the beverage under applied pressure; a method in which carbon dioxide and the beverage can be mixed in a pipe using a mixer such as a carbonator of Tuchenhagen GmbH; a method in which the beverage can be sprayed into a tank filled up with carbon dioxide and allowed to absorb the carbon dioxide; or a method in which the beverage and carbonated water can be mixed to prepare a carbon dioxide gas-containing beverage.

### (Others)

The beverage of the present invention can include various additives, as in typical beverages, unless the effects of the present invention are affected. Examples of the additives include an acidulant, a fragrance, vitamins, coloring agents, an antioxidant, an emulsifier, a preservative, a seasoning, extracts, a pH adjuster, a thickener, and a quality stabilizer.

The beverage of the present invention can contain sugars such as glucose. The beverage of the present invention can use one or more natural sweeteners and artificial sweeteners.

The alcoholic beverage of the present invention is filled in an airtight container such as a bottle, a can, a barrel, or a PET bottle as in typical beverages and subjected to processes such as sterilization process to produce a beverage in a container.

For example, a sterilized container-packed beverage can be produced by, for example, a method in which the beverage is filled in a container and subsequently heat sterilization such as hot water shower sterilization is carried out or a method in which the beverage is sterilized and then filled into a container.

The beverage of the present invention in a preferable embodiment has a Brix value of 3 to 9. The Brix value obtained by using a saccharometer or a refractometer enables the evaluation of a soluble solid content concentration. The Brix value is a value obtained by converting a refractive index measured at 20°C to a mass/mass percent of a sucrose solution based on the conversion table of ICUMSA (International Commission for Uniform Methods of Sugar Analysis). The unit is shown in "Bx", "%", or "degree".

The beverage of the present invention can be a low-solute beverage with a low soluble solid content concentration and encompasses embodiments of so-called low-calorie type beverages as labelled "sugar-free", "net carb-free", and "low-calorie". Note that the labels such as "sugar-free", "net carb-free", and "low-calorie" are defined in Nutrition Labelling Standards based on the regulation of Health Promotion Act in Japan. For example, the label for "sugar-free" is given to a beverage in which an amount of sugars (monosaccharides and disaccharides but not sugar alcohols) contained in the beverage is lower than 0.5 g per 100 g of the beverage. Further, the label for "net carb-free" is shown when a concentration of net carbohydrates contained in a beverage is lower than 0.5 g/100 mL. Net carbohydrate is one of carbohydrates, the three major nutrients, and a collective term for the remains when dietary fibers are removed from the carbohydrates.

Further, the acidity of the beverage of the present invention is, in terms of citric acid, preferably 0.05 to 0.60 g/100 ml, more preferably 0.10 to 0.50 g/100 ml, and further preferably 0.15 to 0.40 g/100 ml. When an acidity is within these ranges, the beverage can be particularly easy to drink due to moderate acidity. The acidity of the beverage can be measured by a general titration method.

Examples of the acidulant include acids such as citric acid, succinic acid, lactic acid, malic acid, tartaric acid, gluconic acid, phosphoric acid or a salt thereof, but not limited thereto. The amount of an acidulant to be used varies depending on the kind of an acidulant to be used and cannot be generalized but can be, for example, within the ranges from 0.01 to 5 mass%, and preferably 0.05 to 0.5 mass%, of the beverage.

In an aspect, the present invention can also be understood to be the method for producing a beverage. The beverage of the present invention is an alcoholic beverage containing eriocitrin and limonene, and the method for producing the beverage according to the present invention comprises a step for causing the beverage to contain eriocitrin and limonene. When a container-packed beverage is produced, the method has at least a step for filling the prepared beverage into a container.

The beverage of the present invention can be produced using a conventionally known method. The person skilled in the art can suitably design conditions for an inclusion method, and as needed, a pasteurization method and a container filling method.

Further, in another aspect, the present invention can also be understood to be a method for improving a taste of an alcoholic beverage containing limonene by including eriocitrin.

### EXAMPLES

Hereinafter, the present invention is described in more detail with reference to specific experimental examples but the present invention is not limited to the following experimental examples. Further, the concentration is a weight basis unless otherwise specified in the present description and numerical value ranges are described as including endpoints thereof.

### Experiment 1: Production and evaluation of alcoholic beverages containing limonene

Beverages having an alcohol content of 0 to 15 v/v% were produced based on the table below. Specifically, alcohol (neutral spirit, alcohol content: 59 v/v%) and limonene (NACALAI TESQUE, INC., D-limonene) were sequentially added to pure water to produce container-packed beverages.

The obtained beverages were evaluated for "intensity of stimulation of a tingling aftertaste" caused by limonene by a sensory test based on a rating system on a scale of 6. Specifically, 6 well-trained sensory evaluators made evaluation based on the following criteria. A solution containing (a) pure water and (b) 30 ppm of limonene and having an alcohol content of 15 v/v% was prepared herein and the sensory evaluation was carried out after the sensory evaluators confirmed that (a) was evaluated as 6 points and (b) as 1 point. "Intensity of stimulation of a tingling aftertaste"
- 6 Points: Not sensed (pure water)
- 5 Points: Substantially not sensed
- 4 Points: Not much sensed
- 3 Points: Slightly sensed
- 2 Points: Sensed
- 1 Point: Intensely sensed (the beverage containing 30 ppm of limonene and having an alcohol content of 15 v/v%)

Subsequently, average points of the evaluation points by the 6 sensory evaluators were calculated and the "intensity of stimulation of a tingling aftertaste" was evaluated as below in accordance with the average points.
"-": Average point of 5 points or more
"±": Average point of 4 points or more and less than 5 points
"+": Average point of 3 points or more and less than 4 points
"++": Average point of 2 points or more and less than 3 points
"+++": Average point of 1 point or more and less than 2 points

**[Table 1]**

| Limonene concentration (ppm) | 0 | 0.5 | 10 | 15 | 20 | 30 | 40 | 50 | 60 | 70 |
|---|---|---|---|---|---|---|---|---|---|---|
| Alcohol content 0 v/v% | - | - | - | - | ± | ± | ± | ± | ± | ± |
| Alcohol content 5 v/v% | - | + | + | ++ | +++ | +++ | +++ | +++ | +++ | +++ |
| Alcohol content 10 v/v% | - | + | + | +++ | +++ | +++ | +++ | +++ | +++ | +++ |
| Alcohol content 15 v/v% | - | + | + | +++ | +++ | +++ | +++ | +++ | +++ | +++ |

As apparent from the above table, it was revealed that when limonene was present in the beverages containing alcohol, the stimulation of a tingling aftertaste was particularly notably sensed. Further, the stimulation of a tingling aftertaste tended to be intensified as an alcohol content increased and a limonene content increased.

It is assumed that an easy-to-drink good alcoholic beverage can be prepared as long as the stimulation of a tingling aftertaste caused by the co-presence of limonene and alcohol can be controlled in the alcoholic beverage having a citrusy flavor containing limonene.

### Experiment 2: Production and evaluation of alcoholic beverages containing limonene

Citrus alcoholic beverages were prepared with compositions of the table below in the same manner as in Experiment 1. In the present experiment, however, eriocitrin (FUJIFILM Wako Pure Chemical Corporation) was further added to produce container-packed beverages.

The obtained beverages were evaluated for "intensity of the stimulation of a tingling aftertaste" in the same manner as in Experiment 1. Further, in the present experiment, "good taste as a beverage" was comprehensively evaluated based on the following criteria from viewpoints of whether a citrusy flavor is sensed and whether unnatural flavor and offensive taste and smell are detected.

### "Good taste as a beverage"

- 6 Points: Extremely good
- Points: Excellent
- 4 Points: Preferable
- 3 Points: Acceptable as a product
- 2 Points: Rather poor
- 1 Point: Poor

For the "Good taste as a beverage", average points of the evaluation points by the 6 sensory evaluators were calculated and evaluated as below. The evaluations of "+" or higher are considered pass as a product and the evaluations of "++" or higher are considered good as a product.
"+++": Average point of 5 points or more
"++": Average point of 4 points or more and less than 5 points
"+": Average point of 3 points or more and less than 4 points
"±": Average point of 2 points or more and less than 3 points
"-": Average point of 1 point or more and less than 2 points

### [Table 2-1]

**Table 2-1. Alcoholic beverage (alcohol content: 5 v/v%)**

| Limonene concentration (ppm) | Eriocitrin concentration (ppm) | Tingling aftertaste stimulation | Good taste as beverage | Comment |
|---|---|---|---|---|
| 15 | 1 | ++ | - | Masking effect on tingling stimulation is not much sensed |
| 15 | 5 | + | ++ | Masking effect on tingling stimulation is slightly sensed |
| 15 | 7 | ± | +++ | Masking effect on tingling stimulation is sensed |
| 15 | 10 | - | +++ | Masking effect on tingling stimulation is high. Thickness is also sensed and the beverage is tasty. |
| 15 | 20 | - | ++ | Tingling stimulation is masked and the beverage is easy to drink, but slight eriocitrin aroma smells |
| 15 | 25 | - | + | Tingling stimulation is masked and the beverage is easy to drink, but characteristic of eriocitrin is also sensed |
| 15 | 30 | - | ± | Tingling stimulation is masked but characteristic of eriocitrin is intensified |

### [Table 2-2]

**Table 2-2. Alcoholic beverage (alcohol content: 10 v/v%)**

| Limonene concentration (ppm) | Eriocitrin concentration (ppm) | Tingling aftertaste stimulation | Good taste as beverage | Comment |
|---|---|---|---|---|
| 0.5 | 2 | + | + | Masking effect on tingling stimulation is not much sensed |
| 10 | 4 | + | + | Masking effect on tingling stimulation is not much sensed |
| 12 | 5 | + | + | Masking effect on tingling stimulation is slightly sensed |
| 15 | 5 | ++ | ++ | Masking effect on tingling stimulation is slightly sensed |
| 20 | 6 | + | +++ | Masking effect on tingling stimulation is sensed |
| 30 | 7 | + | +++ | Masking effect on tingling stimulation is sensed |
| 40 | 8 | + | +++ | Masking effect on tingling stimulation is sensed |
| 50 | 10 | ± | +++ | Masking effect on tingling stimulation is high. Thickness is also sensed and tasty. |
| 60 | 20 | ± | ++ | Tingling stimulation is masked and the beverage is easy to drink, but slight eriocitrin aroma smells |
| 65 | 25 | ± | + | Tingling stimulation is masked and the beverage is easy to drink, but characteristic of eriocitrin is also sensed |
| 70 | 30 | ± | ± | Tingling stimulation is masked but characteristic of eriocitrin is intensified |

### [Table 2-3]

**Table 2-3. Alcoholic beverage (alcohol content: 15 v/v%)**

| Limonene concentration (ppm) | Eriocitrin concentration (ppm) | Tingling aftertaste stimulation | Good taste as beverage | Comment |
|---|---|---|---|---|
| 0.5 | 2 | +++ | + | Masking effect on tingling stimulation is not much sensed |
| 10 | 4 | +++ | + | Masking effect on tingling stimulation is not much sensed |
| 15 | 5 | ++ | ++ | Masking effect on tingling stimulation is slightly sensed |
| 20 | 6 | + | +++ | Masking effect on tingling stimulation is sensed |
| 30 | 7 | + | +++ | Masking effect on tingling stimulation is sensed |
| 40 | 8 | + | +++ | Masking effect on tingling stimulation is sensed |
| 50 | 10 | + | +++ | Masking effect on tingling stimulation is high. Thickness is also sensed and tasty. |
| 60 | 20 | ± | ++ | Tingling stimulation is masked and the beverage is easy to drink, but slight eriocitrin aroma smells |
| 65 | 25 | ± | + | Tingling stimulation is masked and the beverage is easy to drink, but characteristic of eriocitrin is also sensed |
| 70 | 30 | ± | ± | Tingling stimulation is masked but characteristic of eriocitrin is intensified |

As apparent from the above table, when 5 to 25 ppm of eriocitrin was contained in the alcoholic beverages containing limonene, the stimulation of a tingling aftertaste caused by alcohol and limonene was effectively controlled and tasty beverages were obtained.

### Experiment 3: Production and evaluation of alcoholic beverages containing limonene

Alcoholic beverages were prepared with compositions of the table below in the same manner as in Experiment 2 (alcohol content: 10 v/v%, limonene concentration: 15 ppm). In the present experiment, however, p-cresol (NACALAI TESQUE, INC.) was further added to produce container-packed beverages.

The obtained beverages were evaluated for "intensity of the stimulation of a tingling aftertaste" and "good taste as a beverage" were evaluated in the same manner as in Experiment 2.

### [Table 3-1]

**Table 3-1. Alcoholic beverage (alcohol content: 10 v/v%, limonene concentration: 15 ppm)**

| Eriocitrin (ppm) | p-Cresol (ppm) | p-Cresol/eriocitrin mass ratio | Tingl ing aftertaste stimulation | Good taste as beverage | Comment |
|---|---|---|---|---|---|
| 2 | 0.040 | 0.0200 | ++ | + | Masking effect is detected with body. Aroma from cresol is slightly sensed. |
| 7 | 0.055 | 0.0079 | + | ++ | Masking effect is high and tingling aftertaste stimulation is less likely sensed. |
| 10 | 0.055 | 0.0055 | ++ | + | Tingling stimulation is masked. |
| 20 | 0.055 | 0.0028 | + | + | Masking effect is detected on tingling stimulation. Thickness is slightly imparted and citrus flavor is less likely sensed. |
| 25 | 0.055 | 0.0022 | ± | + | Masking effect is high. Acidity from eriocitrin is slightly sensed but within acceptable range |
| 30 | 0.055 | 0.0018 | ± | ± | Masking effect is high but acidity from eriocitrin is intensified. |

### [Table 3-2]

**Table 3-2. Alcoholic beverage (alcohol content: 10 v/v%, limonene concentration: 15 ppm)**

| Eriocitrin (ppm) | p-Cresol (ppm) | p-Cresol/eriocitrin mass ratio | Tingling aftertaste stimulation | Good taste as beverage | Comment |
|---|---|---|---|---|---|
| 10 | 0.005 | 0.0005 | + | + | Masking effect is detected on tingling aftertaste stimulation. Slightly thick and heavy. No problem with flavor. |
| 10 | 0.015 | 0.0015 | ++ | + | Slight thickness is imparted but only a level at which masking effect is not affected. |
| 10 | 0.030 | 0.0030 | ++ | + | Slight thickness is imparted and citrus flavor is weakened |
| 10 | 0.045 | 0.0045 | ++ | + | Smell probably from cresol is slightly sensed but masking effect is within acceptable range |
| 10 | 0.055 | 0.0055 | ++ | + | Tingling stimulation is masked. |

### [Table 3-3]

**Table 3-3. Alcoholic beverage (alcohol content: 10 v/v%, limonene concentration: 15 ppm)**

| Eriocitrin (ppm) | p-Cresol (ppm) | p-Cresol/eriocitrin mass ratio | Tingling aftertaste stimulation | Good taste as beverage | Comment |
|---|---|---|---|---|---|
| 20 | 0.005 | 0.00025 | ± | + | Tingling stimulation is masked and easy to drink. Slight thickness is imparted. |
| 20 | 0.015 | 0.00075 | + | + | Masking effect is detected on tingling stimulation. Slight thickness is imparted and complex flavor is given. |
| 20 | 0.030 | 0.00150 | + | + | Masking effect is detected on tingling stimulation. Slight thickness is imparted and complex flavor is given. |
| 20 | 0.045 | 0.00225 | + | + | Masking effect is detected on tingling stimulation. Slight thickness is imparted and complex flavor is given. |
| 20 | 0.055 | 0.00275 | + | + | Masking effect is detected on tingling stimulation. Slight thickness is imparted and citrus flavor is less likely sensed. |
| 20 | 0.060 | 0.00300 | ++ | + | Masking effect is detected on tingling stimulation but chemical smell is slightly sensed. |
| 20 | 0.090 | 0.00450 | ++ | + | Masking effect on tingling stimulation is within acceptable range but slight smell probably from cresol is concerned. |
| 20 | 0.110 | 0.00550 | ++ | + | Masking effect on tingling stimulation is slightly weakened. Smell like foul smell from cresol is slightly sensed. |

As apparent from the above table, it was confirmed that when a small amount of p-cresol was included, thickness was imparted to the alcoholic beverages.

## Claims

1. An alcoholic beverage containing 10 to 60 ppm of limonene and 5 to 25 ppm of eriocitrin.

2. The alcoholic beverage according to claim 1, containing 15 to 50 ppm of limonene.

3. The alcoholic beverage according to claim 1 or 2, wherein an alcohol content is 1 to 15 v/v%.

4. The alcoholic beverage according to any of claims 1 to 3, containing p-cresol so that a weight ratio of p-cresol/eriocitrin is 0.0060 or less.

5. A method for controlling a stimulation of a tingling aftertaste in an alcoholic beverage containing 10 to 60 ppm of limonene,
the method comprising causing the beverage to contain 5 to 25 ppm of eriocitrin.
